Europäisches Patentamt

European Patent Office

Office européen des brevets

(11) Publication number: **0 408 470 A1**

# EUROPEAN PATENT APPLICATION

(21) Application number: 90420316.3

(22) Date of filing: 05.07.90

(51) Int. Cl.5: **C08F 8/46, C08L 23/26,** C09J 123/26

(30) Priority: 06.07.89 US 376471

(43) Date of publication of application:
16.01.91 Bulletin 91/03

(84) Designated Contracting States:
GR

(71) Applicant: **EASTMAN KODAK COMPANY**
**343 State Street**
**Rochester, New York 14650(US)**

(72) Inventor: **Liu, Yao-Ching, Eastman Kodak**
**Company**
**Patent Department, 343 State Street**
**Rochester, New York 14650-2201(US)**
Inventor: **Edwards, Ray Eastman Kodak**
**Company**
**Patent Department 343 State Street**
**Rochester New York 14650-2201(US)**

(74) Representative: **Parent, Yves et al**
**Kodak-Pathé Département Brevets et**
**Licences Centre de Recherches et de**
**Technologie Zone Industrielle**
**F-71102 Chalon-sur-Saône Cédex(FR)**

(54) Maleated polypropylene blends for melt-bonding applications.

(57) Novel polypropylene compositions are disclosed which display good adhesion to a variety of substrates and which are capable of melt-bonding. Invention compositions can optionally be combined with extrusion coating grade polyethylene and employed for extrusion coating. Invention composition is also useful for injection molding employing multi-gated injection molding apparatus.

EP 0 408 470 A1

# MALEATED POLYPROPYLENE BLENDS FOR MELT-BONDING APPLICATIONS

The present invention relates to polypropylene compositions. In one aspect, the present invention relates to melt-bondable polypropylene compositions. In another aspect, the present invention relates to process for melt-bonding a variety of substrates.

## Background

Polypropylene-based polymer compositions are widely used in a variety of applications, particularly due to their excellent barrier properties. One limitation on the application of polypropylene-based polymer compositions is the limited ability of these materials to form a heat seal. In addition, prior art polypropylene-based polymer compositions display poor adhesion to many substrates.

Since polypropylene-based polymer compositions are most conveniently applied by extrusion coating techniques, it is desired that any modification to the polymer compositions to improve the adhesion of the polypropylene composition to substrates not significantly alter the desirable properties of the composition, i.e., the barrier properties, ability to extrusion coat, and the like.

## Statement of the Invention

In accordance with the present invention, we have discovered that polypropylene materials having defined flow rate and low levels of maleate substituents demonstrate dramatically improved substrate adhesion relative to non-maleated polypropylene material.

We have further discovered, most surprisingly, that coatings of the invention composition are melt-bondable, providing strong bonds at relatively low treatment temperatures.

## Brief Description of the Drawings

Figure 1 is a differential scanning calorimetry (DSC) curve for an exemplary invention composition.
Figure 2 is a plot of the effectiveness of polypropylene materials in heat seal applications as a function of the degree of maleation.

## Detailed Description of the Invention

In accordance with the present invention, there are provided melt-bondable polypropylene compositions comprising maleated polypropylene having a melt flow in the range of about 2 up to 100 decigrams per minute (when measured at 230°C) and wherein the invention compositions contain in the range of about 0.05 up to 2.0 weight percent maleate units. Optionally, invention compositions further comprise in the range of about 5 up to 20 weight percent, based on the weight of the total composition, of an extrusion coating grade polyethylene material and up to about 0.5 weight percent of a polyolefin antioxidant.

In accordance with another embodiment of the present invention, there is provided a process for the low temperature melt-bonding of a first portion of a substrate to a second portion of the substrate, the invention process comprising:

(a) applying the above-described melt-bondable composition to at least a portion of the substrate to produce a laminant structure comprising substrate having a coating thereon of melt-bondable composition at a thickness at least about 0.0075 mm, then

(b) bringing at least a portion of the laminated surface of the substrate into physical contact with another portion of the laminated surface of the substrate, and thereafter

(c) subjecting the melt-bondable composition to conditions sufficient to render the melt-bondable composition of sufficient viscosity to effect a substantially homogeneous bond between the two laminate surfaces.

In accordance with yet another embodiment of the present invention, there is provided a process for the low temperature melt-bonding of a first substrate to a second substrate, the invention process comprising:

(a) applying the above-described melt-bondable composition to at least a portion of the first substrate to produce a first laminant structure comprising the first substrate having a coating thereon of the melt-bondable composition at a thickness at least about 0.0075 mm, and applying the above-described melt-bondable composition to at least a portion of the second substrate to produce a second laminant structure comprising the second substrate having a coating thereon of the melt-bondable composition at a thickness at least about 0.0075 mm, then

(b) bringing at least a portion of the first laminated structure into physical contact with at least a portion of the second laminated structure, and thereafter

(c) subjecting the melt-bondable composition to conditions sufficient to render the composition of sufficient viscosity to effect a substantially homogeneous bond between the first and second laminated structures.

In accordance with yet another embodiment of the present invention, there is provided a process for the multi-gated injection molding of a polypropylene article, which process comprises introducing the above-described melt-bondable composition into at least two injection ports of a multi-gated injection molding apparatus under conditions suitable to produce a unitary injection molded article.

Polypropylene materials contemplated for use in the practice of the present invention include materials having a melt flow in the range of about 2 up to 100 decigrams per minute (when measured at 230°C). Preferred polypropylene materials are those having a melt flow in the range of about 0.5 up to 75, with materials having a melt flow in the range of about 40 up to 60 being most preferred because materials having such properties possess the presently most desirable balance of visco elastic properties for the production of thin coatings at high coating speeds.

Polypropylenes useful in the practice of the present invention can be readily prepared by a variety of techniques as are well known in the art, e.g., gas phase polymerization, solution-phase polymerization, and the like.

The maleated polypropylenes of the present invention can be readily prepared by maleation of polypropylene. Those of skill in the art can readily determine suitable methods for the maleation process. For example, polypropylene, maleic anhydride, and an appropriate peroxide catalyst can be tumble-blended and subsequently extruded to produce materials having the desired degree of maleation.

Peroxide catalysts contemplated for use in the practice of the present invention are peroxides which do not substantially reduce the molecular weight of the polypropylene material during the maleation process. Exemplary peroxides include benzoyl peroxide, dicumyl peroxide, t-butyl perbenzoate, and the like; with benzoyl peroxide being the presently preferred peroxide because of its ready availability and because it provides high levels of maleate incorporated with only low levels of peroxide required, while only nominally affecting the molecular weight of the polypropylene material undergoing treatment.

Typical conditions employed for the treatment of polypropylene materials with maleate include a barrel temperature in the range of about 190 up to 240°C, a die temperature in the extrusion zone falling in the range of about 200 up to 250°C, a melt pressure falling in the range of about 400 up to 520 psia (2758 to 3585 kPa (absolute)) (when a screen pack is employed on the extruder), an extruder screw speed falling in the range of about 100 up to 350 rpm, a vent pressure in the range of about 0.5 up to 20 mm Hg (0.07 up to 2.66 kPa) and a combined residence time in contact with the heated zones of the extruder in the range of about 20 up to 120 seconds.

It is desirable, after maleation of the polypropylene material, to subject the treated polymer to reduced pressure for a time sufficient to remove any unreacted maleate, as well as any other low molecular weight impurities which may be present in the polymer (e.g., residues of the peroxide catalyst, etc).

Maleated polypropylenes of the present invention contain in the range of about 0.05 up to 2 weight percent maleation, based on the total weight of the finished polypropylene component. Preferred level of maleation falls in the range of about 0.1 up to 1 weight percent maleate units, with a maleate content in the range of about 0.1 up to 0.5 weight percent being most preferred because a good balance is obtained between adhesion to substrate while the extruded material still readily releases from the chill roll of an extrusion coating apparatus.

Invention maleated polypropylene compositions can optionally be further combined with extrusion coating grade polyethylene materials to facilitate application of invention material by extrusion coating. Suitable polyethylene materials have a melt index in the range of about 1 up to 15 dg/min (when measured at 190°C). Preferred polyethylene materials, when employed, are those having a melt index falling in the range of about 2 up to 7, with materials having a melt index in the range of about 2 up to 4 being most preferred because materials having such properties possess the presently most desirable balance of visco elastic properties for the production of thin coatings at high coating speeds.

Polyethylene materials useful in the practice of the present invention can be prepared by polymerizing relatively high purity ethylene in a stirred reactor at pressures above about 1000 atmospheres and temperatures above about 200°C, using a peroxide-type of catalyst, such as, for example, di-tertiarybutyl peroxide. Lower purity ethylene containing inert materials such as methane, ethane, carbon dioxide, and the like, may be introduced into the ethylene feed to control the purity thereof. Publications to which the reader is directed for further general details on the preparation of suitable low density polyethylenes are the text Polythene by Renfrew and Morgan, at pp. 11-17 and the article in Petroleum Refiner (1956) by Thomasson, McKetta and Ponder, found at p. 191.

When employed, up to about 20 weight percent, based on the total composition weight, of extrusion coating grade polyethylene can be included in the invention composition. Preferably, in the range of about 5 up to 20 weight percent of the extrusion coating grade polyethylene material will be employed, with in the range of about 10 up to 20 weight percent of extrusion coating grade polyethylene material being employed.

Polyethylene materials useful in the practice of the present invention are typically low density materials. Polyethylene having densities in the range of about 0.915 up to 0.926 are presently preferred materials.

It is desirable that the polyethylene materials employed in the practice of the present invention have a sufficiently broad molecular weight distribution so that the resulting composition is capable of being extrusion coated at temperatures in the range of about 400 up to 480° F (about 205 up to 250° C). Those of skill in the art recognize that materials of very narrow molecular weight distribution will not be suitable for the desired extrusion coating application, while materials having intermediate, up to very broad molecular weight distributions, will be more suitable for the desired extrusion coating application. Typically, materials employed in the practice of the present invention will have a polydispersity index, i.e., ratio of weight average molecular weight (Mw) to number average molecular weight (Mn), of at least about 7.

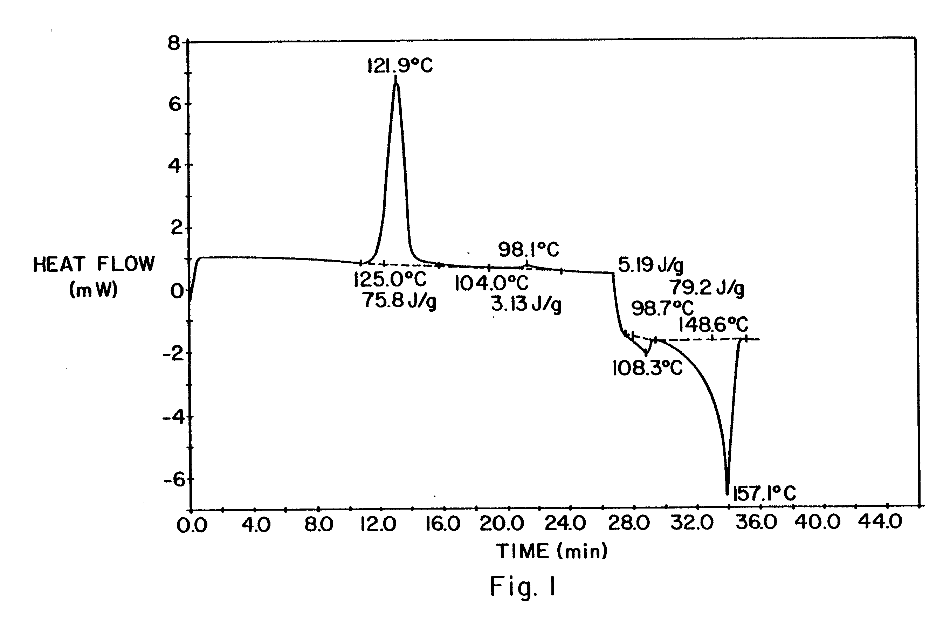

Invention compositions also exhibit characteristic behavior when analyzed by differential scanning calorimetry (DSC). A DSC curve for a typical composition prepared in accordance with the present invention is provided as Figure 1. This curve indicates that the invention composition contains two components, a low melting component (the polyethylene component) and a higher melting component (the maleated polypropylene component). It is of interest that the melting point of the polypropylene component is not significantly changed by the maleation process.

Additives, stabilizers, fillers, and the like can be present in the components forming the polymer blend, or may be added when the polymers are blended to form the extrusion coating composition.

The compositions may be prepared in various ways, such as dry blending, dry blending and then passing through a compounding extruder, compounding on a milling roll, or in a Banbury mixer, by fusion, or by blending in solution. Any method whereby the components can be blended together will produce the desired blend. For example, fine pellets of each polymer, having an average size of about 1/14 inch (1.8 mm) with up to about 20% of the pellets being about 1/8 inch (3.1 mm) in diameter with some pellets being smaller than 1/16 inch (1.6 mm), are blended mechanically, and the blend is fed to an extruder wherein it is fused and extruded.

The melt may be extruded or fabricated at melt temperatures in the preferred range of about 420° F to 480° F (about 215° C to 250° C) which have been found to give excellent results with maximum usable extruding or coating speeds with a minimum of defects such as pinholes.

Where the invention product is used for extrusion coating of a substrate such as paper or paperboard from the melt, it is apparent upon examination of the resulting product that such process has been used, since the soft extruded polymer conforms to minute surface imperfections of the paper without penetrating deeply therein. If paper is the substrate, it may, for example, have a basis weight of from about 5 lbs to about 200 lbs which corresponds to paper as thin as tissue, and being up to the thickness of paperboard. Bleached or unbleached kraft as paper or thin board is preferred, although sheets from bleached or unbleached sulfite, groundwood, or soda pulps are useful. Similarly, other fibrous or nonfibrous substrates may be coated.

Additional substrates contemplated for use in the practice of the present invention include fibers, polymeric materials, metal foils, and the like. Polymeric substrates include polyolefins or functionally modified polyolefins, polyesters or functionally modified polyolefins, polyesters or functionally modified polyesters, ethylene-vinyl alcohol copolymers or functionally modified derivatives thereof, polyamides or functionally modified polyamides, and the like.

Invention compositions are useful, inter alia , in extrusion coating processes. Extrusion coating processes are well known to those of skill in the art and the skilled artisan, armed with the guidance provided herein, can readily determine suitable parameters for carrying out the extrusion coating of a given substrate with any specific composition within the scope of the present invention.

Invention compositions are also useful in heat seal applications, wherein the portion of the composition to be heat sealed is first heated, then brought into contact with the material to which it is to be bound, and the two surfaces pressed together for a time sufficient to allow a destructable bond to form between the two surfaces. Invention compositions can be heated in preparation for heat sealing in a variety of ways, e.g., by flame treatment, radiant heating, convection heating, and the like. Those of skill in the art can readily identify numerous means for carrying out a heat seal operation.

Invention compositions also find utility in multi-gate injection molding processes, e.g., as used for the preparation of large injection molded articles. Multi-gate injection molding processes are well known in the art, to which the artisan is directed for detailed information concerning such processes.

The invention will now be described in greater detail with reference to the following non-limiting examples.

EXAMPLES

Example 1

Tenite (trademark) brand polypropylene 423S (49 parts by weight; having a nominal melt flow of about 3), Tenite brand polypropylene 424S (49 parts; having a nominal melt flow of about 8), benzoyl peroxide (1 part), and maleic anhydride (1 part) were tumble-blended in a fiber drum and charged into a 25 mm twin screw extruder (Model #ZE25, manufactured by Berstorff Corp.) with the following extruder conditions:

| Barrel Temperature | 190°-240°C |
|---|---|
| Die Temperature | 240°-250°C |
| Melt Pressure | 400-520 psi (2758-3585 kPa) |
| Extruder Screw Speed | 125 rpm |
| Feed Rate | 10 pound/hr (4.5 kg/hr) |
| Vacuum (vent) | ~1.5 mm Hg (.20 kPa) |
| Residence Time | 80-120 seconds |

The extruded products were pelletized and analyzed to have a melt flow rate of 50 dg per minute at 230°C, an acid number of 2.5 mg KOH per gram, and a maleate content of about 0.44 wt %.

Example 2

Tenite brand polypropylene 422S (96.3 parts by weight; having a nominal flow rate of about 2), benzoyl peroxide (0.8 part), and maleic anhydride (2.9 parts) were tumble-blended and fed into the twin-screw extruder under the same operation conditions as described in Example 1. The product was analyzed to have a melt flow rate of 73 dg per minute, an acid number of 3 mg KOH per gram, and a maleate content of about 0.5 wt %.

Example 3

Tenite brand polypropylene 423S (98.7 parts by weight; having a nominal flow rate of about 3), benzoyl peroxide (0.6 part), and maleic anhydride (0.7 part) were tumble-blended in a fiber drum and charged into the twin-screw extruder under the same operation conditions as in Example 1. The product was analyzed to have a melt flow rate of 34 dg per minute at 230°C, an acid number of 1.2 mg KOH per gram, and a maleate content of about 0.2 wt %.

Example 4

Maleated polypropylene from Examples 1 through 3, nonmaleated polypropylene (89.85 parts by weight; having a nominal flow rate of about 55) or a blend of 0.2 wt % maleated polypropylene with non-maleated polypropylene to achieve 0.1 wt % maleation, Tenite brand polyethylene with a melt index of 3.5 dg per minute (10 parts), and the antioxidant Irganox (trademark) 1010 (0.15 part) were tumble-blended and fed into the twin-screw extruder under the same operation conditions as in Example 1. The extruded products were then fed to prepare an extrusion coating specimen for heat seal and adhesion testing. The four samples were extrusion-coated under the following conditions

| Extruder | 3.5 Inch (87.5 mm) Single Screw Extruder |
| --- | --- |
| Chill Roll | Matte |
| Melt Temperature | 480° F (249° C) |
| Barrel Temperature | 480° F (249° C) max. |
| Output | 160 lb/hr (72 kg/hr) |
| Line Speed | 400 fpm (120 m/min) |
| Substrate | 22-pt Board/E8-050P Polyethylene as the Opposing Coating |
| Slit | Retains |
| Substrates Primed Before Coating with | Flame |

Heat-seal ability of these materials was tested employing the following procedure:

1. Paperboard is coated with a 1 mil (0.001 inches) thickness of each extruder product;

2. Two 1" x 4" (25 mm x 100 mm) specimens of the coated paperboard are clamped into the heat seal apparatus, held initially about 2" (50 mm) apart;

3. The polymer coatings are subjected to radiant heat (e.g. calrods heated to about 1150° F) (620° C) over a range of exposure times to effect molten coatings having viscosities dependent upon time of exposure;

4. The heaters are then removed from the specimens, which are allowed to cool for a fixed time of 2.5 seconds, before clamping;

5. After cooling, the specimens are clamped together in such a way that a 1" x 1" (25 mm x 25 mm) square area of both specimens is subjected to a force of 500 psi (3448 kPa) for a fixed time of 0.7 seconds. The clamps employed for this step are maintained at about ambient temperature with cooling water circulated therethrough;

6. The clamps are opened once the requisite clamp time has passed, and the specimens are subjected to a separation force provided by a 1500-g spring tension;

7. Specimens are then further pulled apart by hand to determine the strength of the heat seal.

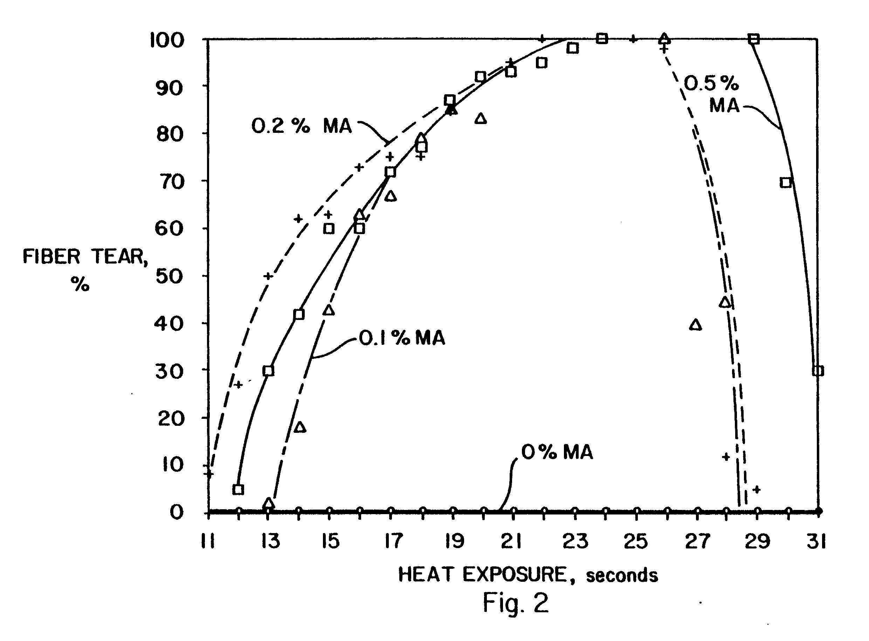

The results of heat seal testing are shown in Figure 2. Where it is possible to peel the two specimens apart without any effect on the paperboard substrate, this is reported as 0% fiber tear, and represents a very poor (or non-existent) bond. Conversely, if the only way to separate the two specimens was as a result of tearing the paperboard substrate, this is reported as 100% fiber tear, and represents a strong bond. Samples which display an intermediate degree of heat seal are analyzed by measuring the percentage of the area of the 1" x 1" (25 mm x 25 mm) region subjected to heat seal conditions which forms a destructive bond, i.e., that portion of the 1" x 1" (25 mm x 25 mm) heat sealed area which will only separate via fiber tear (as opposed to failure of the heat seal bond).

The results displayed in Figure 2 indicate that the addition of as little as 0.1 wt % maleic anhydride to polypropylene provides strong heat seal ability, as evidenced by the high percentage of fiber tear when it is attempted to separate heat sealed specimens. In contrast, non-maleated polypropylene is seen to essentially lack the ability to produce a heat seal.

The invention has been described in detail with particular reference to preferred embodiments thereof, but it will be understood that variations and modifications can be effected within the spirit and scope of the invention.

## Claims

1. A melt-bondable composition comprising maleated polypropylene having a melt flow in the range of 2 up to 100 dg per minute at 230° C and containing in the range of 0.05 up to 2.0 wt % maleate units.

2. A composition in accordance with Claim 1 wherein said maleated polypropylene has a melt flow in the range of 8.5 up to 75 dg per minute at 230° C.

3. A composition in accordance with Claim 1 wherein said maleated polypropylene has a melt flow in the range of 40 up to 60 dg per minute at 230° C.

4. A composition in accordance with Claim 1 wherein said maleated polypropylene contains in the range of 0.1 up to 1.0 wt % maleate units.

5. A composition in accordance with Claim 1 wherein said maleated polypropylene contains in the range of 0.1 up to 0.5 wt % maleate units.

6. A composition in accordance with Claim 1 further comprising:

in the range of 5 up to 20 wt %, based on the weight of the total composition, of an extrusion coating grade polyethylene, and

in the range of 0 up to 0.5 wt %, based on the weight of the total composition, of a polyolefin antioxidant.

7. A composition in accordance with Claim 6 wherein said extrusion coating grade polyethylene has a melt index in the range of 1 up to 15.

8. A composition in accordance with Claim 6 wherein said extrusion coating grade polyethylene has a melt index in the range of 2 up to 7.

9. A composition in accordance with Claim 6 wherein said extrusion coating grade polyethylene has a melt index in the range of 2 up to 4.

10. A composition in accordance with Claim 6 wherein said composition contains in the range of 10 up to 20 wt % of said extrusion coating grade polyethylene.

11. A composition in accordance with Claim 1 further comprising at least one additive selected from the group consisting of fillers, pigments, and stabilizers.

12. A composition in accordance with Claim 6 further comprising at least one additive selected from the group consisting of fillers, pigments, and stabilizers.

13. A composition in accordance with Claim 6 having a DSC curve substantially as shown in Figure 1.

14. A process for the low temperature melt-bonding of a first portion of a substrate to a second portion of said substrate, said process comprising:

(a) applying the melt-bondable composition of Claim 1 to at least a portion of said substrate to produce a laminate structure comprising said substrate having a coating thereon of said melt-bondable composition at a thickness of at least 0.0003 inches (0.0075 mm), then

(b) bringing at least a portion of the laminated surface of said substrate into physical contact with another portion of the laminated surface of said substrate, and thereafter

(c) subjecting the melt-bondable composition to conditions sufficient to render said composition of sufficient viscosity to effect a substantially homogeneous bond between the two laminated substrates.

15. A process in accordance with Claim 14 wherein said substrate is selected from:

papers,

paperboards,

fibers,

polymeric materials, or

metal foils.

16. A process in accordance with Claim 15 wherein said polymeric materials are selected from:

polyolefins or polyfunctionally modified polyolefins,

polyesters or functionally modified polyesters,

ethylene-vinyl alcohol copolymers,

polyamides or functionally modified polyamides.

17. A process in accordance with Claim 14 wherein said melt-bondable composition is applied to said substrate by melt extrusion.

18. A process in accordance with Claim 14 wherein said melt-bondable composition is applied to said substrate by a solvent coating process.

19. A process in accordance with Claim 14 wherein said melt-bondable composition is applied to said substrate by laminating a pre-extruded film onto said substrate.

20. A process for the low temperature melt-bonding of a first portion of a substrate to a second portion of said substrate, said process comprising:

(a) applying the melt-bondable composition of Claim 6 to at least a portion of said substrate to produce a laminate structure comprising said substrate having a coating thereon of said melt-bondable composition at a thickness of at least 0.0003 inches (0.0075 mm), then

(b) bringing at least a portion of the laminated surface of said substrate into physical contact with another portion of the laminated surface of said substrate, and thereafter

(c) subjecting the melt-bondable composition to conditions sufficient to render said composition of sufficient viscosity to effect a substantially homogeneous bond between the two laminated substrates.

21. A process in accordance with Claim 20 wherein said substrate is selected from:

papers,

paperboards,

fibers,
polymeric materials, or
metal foils.

22. A process in accordance with Claim 21 wherein said polymeric materials are selected from:
polyolefins or functionally modified polyolefins,
polyesters or functionally modified polyesters,
ethylene-vinyl alcohol copolymers,
polyamides or functionally modified polyamides.

23. A process in accordance with Claim 20 wherein said melt-bondable composition is applied to said substrate by melt extrusion.

24. A process in accordance with Claim 20 wherein said melt-bondable composition is applied to said substrate by a solvent coating process.

25. A process in accordance with Claim 20 wherein said melt-bondable composition is applied to said substrate by laminating a pre-extruded film onto said substrate.

26. A process for the low temperature melt-bonding of a first substrate to a second substrate, said process comprising:

(a) applying the melt-bondable composition of Claim 1 to at least a portion of said first substrate to produce a first laminate structure comprising said first substrate having a coating thereon of said melt-bondable composition at a thickness of at least 0.0003 inches (0.0075 mm), and applying the melt-bondable composition of Claim 1 to at least a portion of said second substrate to produce a second laminate structure comprising said second substrate having a coating thereon of said melt-bondable composition at a thickness of at least 0.0003 inches (0.0075 mm), then

(b) bringing at least a portion of said first laminated structure into physical contact with at least a portion of the second laminated structure, and thereafter

(c) subjecting the melt-bondable composition to conditions sufficient to render said composition of sufficient viscosity to effect a substantially homogeneous bond between said first and second laminated structures.

27. A process in accordance with Claim 26 wherein said first and second substrates are independently selected from:
papers,
paperboards,
fibers,
polymeric materials, or
metal foils.

28. A process in accordance with Claim 27 wherein said polymeric materials are selected from:
polyolefins or functionally modified polyolefins,
polyesters or functionally modified polyesters,
ethylene-vinyl alcohol copolymers,
polyamides or functionally modified polyamides.

29. A process in accordance with Claim 26 wherein said melt-bondable composition is applied to said substrate by melt extrusion.

30. A process in accordance with Claim 26 wherein said melt-bondable composition is applied to said substrate by a solvent coating process.

31. A process in accordance with Claim 26 wherein said melt-bondable composition is applied to said substrate by laminating a pre-extruded film onto said substrate.

32. A process for the multi-gated injection molding of a polypropylene article, said process comprising:
introducing the melt-bondable composition of Claim 1 into at least two injection ports of a multi-gated injection molding apparatus under conditions suitable to produce a unitary injection molded article.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 433 777 (M.O. BRUNSON)<br>* Claims 1-12; column 2, line 62 - column 3, line 9 *<br>— — — | 1-32 | C 08 F 8/46<br>C 08 L 23/26<br>C 09 J 123/26 |
| Y | US-A-4 031 062 (K. SHIRAYAMA)<br>* Claims 1-7; column 5, lines 17-61 *<br>— — — | 1-32 | |
| Y | FR-A-2 231 689 (SUMITOMO CHEMICAL)<br>* Claims 1-24 *<br>— — — | 1-32 | |
| A | CHEMICAL ABSTRACTS, vol. 95, no. 22, November 1981, page 39, abstract no. 188177b, Columbus, Ohio, US;<br>& JP-A-81 95 914 (TOKUYAMA SODA CO., LTD) 03-08-1981<br>* Abstract *<br>— — — | 1 | |
| A | CHEMICAL ABSTRACTS, vol. 83, 1975, page 45, abstract no. 44383y, Columbus, Ohio, US;<br>& JP-A-75 04 167 (MITSUBISHI PETROCHEMICAL CO., LTD) 17-01-1975<br>* Abstract *<br>— — — | 1 | |
| A | CHEMICAL ABSTRACTS, vol. 97, no. 8, August 1982, page 14, abstract no. 56426p, Columbus, Ohio, US;<br>& SU-A-910 660 (V.E. PUSTOVIT et al.) 07-03-1982<br>* Abstract *<br>— — — | 1 | TECHNICAL FIELDS SEARCHED (Int. Cl.5)<br><br>C 08 F<br>C 08 L<br>C 09 J<br>C 09 D |
| A | DE-A-2 708 757 (IDEMITSU KOSAN)<br>* Claims 1-11 *<br>— — — | 1 | |
| A | CHEMICAL ABSTRACTS, vol. 100, no. 6, February 1984, page 15, abstract no. 35046e, Columbus, Ohio, US;<br>& CS-A-211 871 (E. BORSIG et al.) 16-05-1983<br>* Abstract *<br>— — — — — | 1 | |

The present search report has been drawn up for all claims

| Place of search | Date of completion of search | Examiner |
|---|---|---|
| The Hague | 06 November 90 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document